# FASCICULE DE BREVET EUROPEEN

(11) **EP 3 005 533 B1**
(45) Date de publication et mention de la délivrance du brevet: **09.11.2022**
(21) Numéro de dépôt: 14739870.5
(22) Date de dépôt: 02.06.2014
(51) Int. Cl.: H02K 3/18, H02K 3/52

(54) **MACHINE ELECTRIQUE TOURNANTE POUR VEHICULE AUTOMOBILE**
ELEKTRISCHE DREHMASCHINE FÜR KRAFTFAHRZEUGE
ELECTRICAL ROTATING MACHINE FOR MOTOR VEHICLE

(30) Priorité: 04.06.2013 FR 1355080
(43) Date de publication de la demande: 13.04.2016
(73) Titulaire: Valeo Equipements Electriques Moteur, 94046 Créteil Cedex (FR)
(72) Inventeur: MARGUERITTE, David, F-62170 Wailly Beaucamp (FR); DELIANNE, Henri, F-62630 Maresville (FR); BILTERYST, Pierre-Yves, F-62170 Brimeux (FR)
(74) Mandataire: Valeo Systèmes Thermiques
(86) Numéro de dépôt international: PCT/FR2014/051289
(87) Numéro de publication internationale: WO 2014/195611

(56) Documents cités:
- EP-A2- 1 257 041
- FR-A1- 2 710 197
- JP-A- H08 205 496
- US-A- 5 174 013
- US-A- 6 037 694
- US-A- 6 049 966

## Description

L'invention concerne notamment une machine électrique tournante, notamment un alternateur ou un alterno-démarreur, pour véhicule automobile.

Le brevet US 5 174 013 décrit un bobinage de machine électrique avec un fil de section carrée.

Le brevet US 5 714 822 décrit un bobinage mélangeant des spires de différents types, de section carrée et ronde.

Le brevet US 6 037 694 décrit un bobinage de machine électrique formé par un fil avec une première portion enroulée, de section transversale rectangulaire et une deuxième portion permettant le raccord du bobinage à un circuit électrique, le fil présentant, le long de cette deuxième portion, une section transversale sensiblement circulaire.

La demande de brevet FR 2 928 790 décrit un enroulement de bobinage.

La présente invention vise à permettre de réaliser un rotor présentant une performance améliorée tout en simplifiant sa conception.

L'invention a ainsi pour objet un rotor, avec les caractéristiques de la revendication 1.

Grâce à l'invention, il est possible d'obtenir un taux de remplissage optimal, et donc une performance électrique optimale, du fait de la section adéquate des spires, tout en permettant d'utiliser des connexions classiques adaptées à un fil de section circulaire.

L'invention permet en outre de se passer d'aimants, et/ou améliorer les performances pour aimants ferrites.

L'invention permet également de réduire l'espace d'air entre les spires, et donc d'améliorer le gain thermique.

De plus, le passage du fil, par exemple de rond en carré, permet de garder le procédé de dénudage classique.

Avantageusement la première portion du fil est enroulée selon une pluralité de spires.

Dans un exemple de mise en œuvre de l'invention, la deuxième portion du fil est enroulée selon au moins une spire.

En variante, la deuxième portion du fil est enroulée selon moins d'une spire.

Si on le souhaite, toutes les spires du fil sont formées par la première portion du fil.

Le cas échéant, la deuxième portion est dans le prolongement de la première portion.

De préférence, la section transversale de la première portion du fil présente au moins deux méplats.

Dans un exemple de mise en œuvre de l'invention, la section transversale de la première portion du fil présente une forme sensiblement polygonale, notamment sensiblement rectangulaire ou triangulaire, par exemple carrée ou triangulaire équilatérale.

En variante, les méplats sont reliés entre eux par des côtés arrondis.

Avantageusement, des spires voisines du bobinage sont en appui l'une contre l'autre via les méplats de ces spires.

Si on le souhaite, dans un plan passant par l'axe de rotation du rotor, le bobinage comporte une pluralité de sections transversales de spires qui sont disposées suivant des rangées sensiblement parallèles entre elles.

Ceci permet un taux de remplissage très satisfaisant.

Dans un exemple de mise en œuvre de l'invention, ces rangées de sections de spires sont parallèles à l'axe de rotation du rotor.

Dans un exemple de mise en œuvre de l'invention, une pluralité de sections transversales de spires, de préférence avec méplats, sont disposées de manière étagée de manière à remplir au maximum l'intérieur des cornes des roues polaires du rotor.

En section transversale, cette configuration étagée peut être pyramidale.

De préférence, le fil formant le bobinage est de section rectangulaire sur toute sa longueur, à l'exception des portions permettant le raccord électrique à un circuit électrique, portions de raccord qui présentent une section sensiblement circulaire.

Par exemple, le bobinage comporte :
- des spires radialement intérieures de section transversale avec au moins un méplat,
- des spires radialement extérieures de section transversale sensiblement circulaire.

Si on le souhaite, toutes les spires du bobinage sont à section transversale avec au moins un méplat, à l'exception de la rangée de spires la plus radialement extérieure dans laquelle les spires sont à section sensiblement circulaire.

Ceci peut permettre une position de dénudage du fil pour la mise en place dans les crochets du collecteur.

Dans un exemple de mise en œuvre de l'invention, le bobinage comporte un seul fil.

Selon l'invention, le fil comporte une portion de raccord agencée pour être reliée à une patte de raccord d'un ensemble collecteur pour assurer la connexion électrique au circuit.

Toujours selon l'invention, le rotor comporte au moins un organe de guidage permettant de guider la portion de raccord.

L'organe de guidage comporte au moins l'un des éléments suivants : une gorge, un muret, un pion.

Selon l'invention, la portion de raccord est formée sur la deuxième portion du fil de section transversale sensiblement et partiellement sur la première portion du fil de section transversale avec au moins un méplat.

La portion de raccord du fil peut comporter au moins une boucle enroulée autour d'un pion de l'organe de guidage.

Selon l'invention le fil comporte au moins une portion de jonction entre la première portion et la deuxième portion.

Selon l'invention, la portion de jonction se situe entre la patte de raccord et une première gorge de l'organe de guidage ou au niveau de la première gorge de l'organe de guidage ou entre au moins un muret et au moins un pion de l'organe de guidage.

L'invention permet une section de fil variable en fonction de la fenêtre de bobinage, et donc une réduction du jeu de la dernière spire par rapport à l'isolant.

L'invention a encore pour objet une machine électrique tournante comprenant un rotor tel que défini ci-dessus.

Par exemple, la machine un alternateur ou un alterno-démarreur.

L'invention pourra être mieux comprise à la lecture de la description détaillée qui va suivre, d'exemples de mise en œuvre non limitatifs de l'invention, et à l'examen du dessin annexé, sur lequel :
- la figure 1 représente, schématiquement et partiellement, en coupe, une machine électrique tournante selon un exemple de mise en œuvre de l'invention,
- la figure 2 représente, schématiquement et partiellement, en coupe, un rotor de la machine de la figure 1, dans lequel, la portion de raccord du bobinage est de section circulaire sur toute sa longueur, ce qui ne correspond pas à l'invention.
- la figure 3 représente, schématiquement et partiellement, en coupe, un exemple de bobinage selon l'invention,
- les figures 4 à 6 illustrent différents exemples de bobinage selon l'invention,
- la figure 7 montre schématiquement une étape de fabrication d'un bobinage selon l'invention, et
- la figure 8 illustre un autre exemple de bobinage selon l'invention.

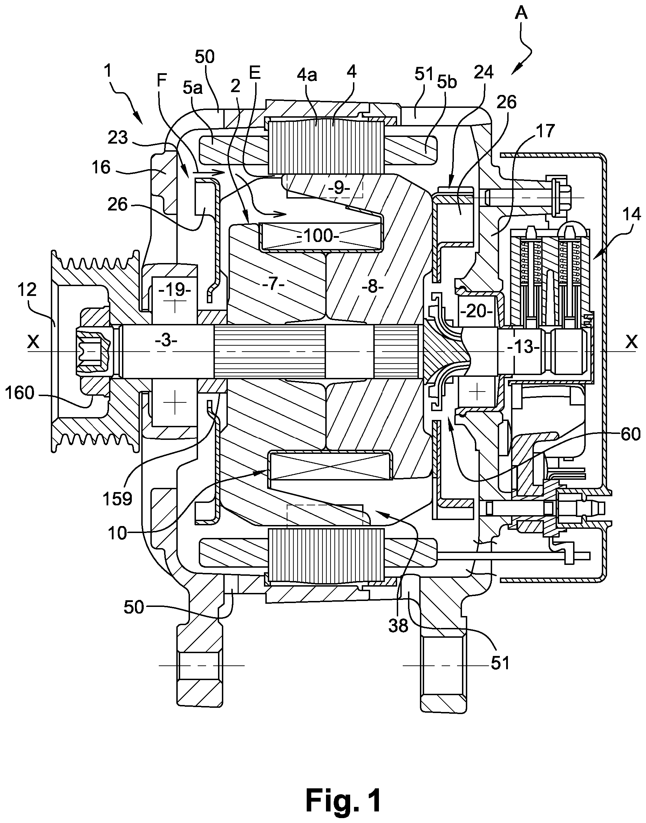

On a représenté sur la figure 1 un alternateur A compact et polyphasé, notamment pour véhicule automobile.

Cet alternateur transforme de l'énergie mécanique en énergie électrique et peut être réversible. Un tel alternateur réversible est appelé alterno-démarreur et permet de transformer de l'énergie électrique en énergie mécanique notamment pour démarrer le moteur thermique du véhicule.

Cet alternateur A comporte un carter 1 et, à l'intérieur de celui-ci, un rotor 2 à griffes, solidaire en rotation de manière directe ou indirecte d'un arbre 3, et un stator 4, qui entoure le rotor 2 avec présence d'un entrefer.

L'axe X-X de l'arbre 3 forme l'axe de rotation du rotor 2.

Dans la suite de la description les orientations radiale, transversale et axiale sont à considérer par rapport à cet axe X-X.

Le stator 4 comporte un corps 4a en forme d'un paquet de tôles doté d'encoches, par exemple du type semi fermé, équipées d'isolant d'encoches pour le montage des phases du stator, chaque phase comportant au moins un enroulement traversant les encoches du corps du stator et formant, avec toutes les phases, un chignon avant 5a et un chignon arrière 5b de part et d'autre du corps 4a du stator.

Les enroulements sont obtenus par exemple à partir d'un fil continu recouvert d'émail ou à partir d'éléments conducteurs en forme de barre, tels que des épingles reliées entre elles par exemple par soudage.

Ces enroulements sont par exemple des enroulements triphasés connectés en étoile ou en triangle, dont les sorties sont reliées à au moins un pont redresseur comportant des éléments redresseurs tels que des diodes ou des transistors du type MOSFET, notamment lorsqu'il s'agit d'un alterno-démarreur comme décrit par exemple dans le document FR A 2 745 445.

Le rotor 2 comporte deux roues polaires 7, 8. Chaque roue 7, 8 présente un flasque d'orientation transversale pourvu à sa périphérie externe de dents 9 par exemple de forme trapézoïdale et d'orientation axiale. Les dents 9 d'une roue sont dirigées axialement vers le flasque de l'autre roue, la dent d'une roue polaire pénétrant dans l'espace existant entre deux dents 9 voisines de l'autre roue polaire, de sorte que les dents 9 des roues polaires soient imbriquées.

La périphérie externe des dents 9 est d'orientation axiale et définit avec la périphérie interne du corps 4a du stator l'entrefer E entre le stator 4 et le rotor 2.

La périphérie interne des dents 9 est inclinée. Ces dents 9 sont moins épaisses à leur extrémité libre.

Les flasques des roues 7, 8 sont de forme annulaire.

Un noyau cylindrique est intercalé axialement entre les flasques des roues 7,8. Ici ce noyau consiste en deux demi noyaux appartenant chacun à l'un des flasques.

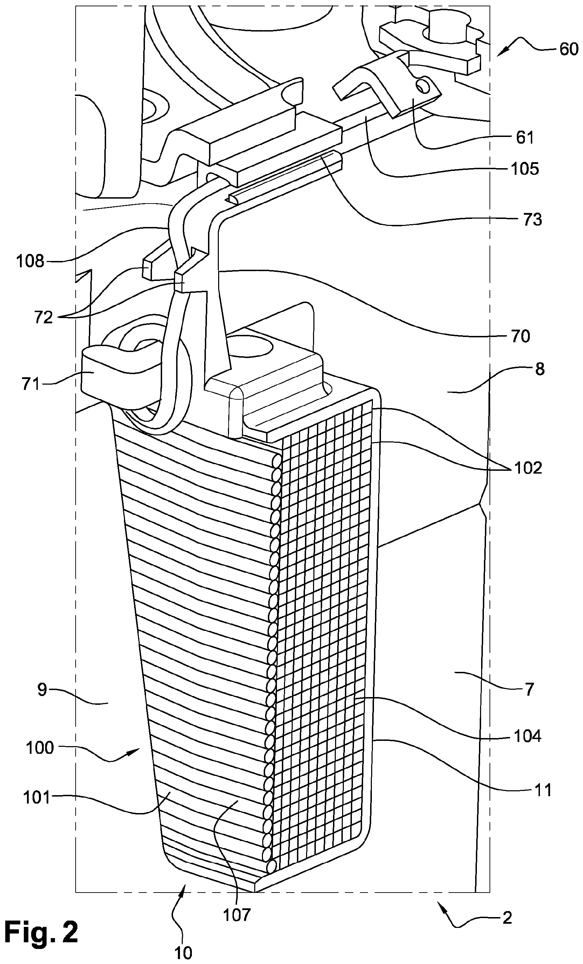

Le rotor 2 comporte, entre le noyau et les dents 9, une bobine 10 comportant un moyeu 11 et un bobinage électrique 100 sur ce moyeu 11, comme on peut le voir notamment sur la figure 2.

Dans l'exemple décrit, ce moyeu 11 est en matière électriquement isolante telle que de la matière plastique, tandis que les roues polaires 7, 8 et le noyau sont métalliques en étant ici en matière ferromagnétique, telle que de l'acier doux. L'arbre 3 est également métallique en étant en matériau ferromagnétique, tel que de l'acier, plus dur que les roues polaires et le noyau du rotor à griffes.

Le carter 1 comporte des palier avant 16 et palier arrière 17 assemblés ensemble.

Le palier arrière 17 porte le porte-balais, le régulateur de tension et au moins un pont redresseur.

Les paliers 16 et 17 sont de forme creuse et portent chacun centralement un roulement à billes respectivement 19 et 20 pour le montage à rotation de l'arbre 3 du rotor 2.

Une poulie 12 est fixée sur l'extrémité avant de l'arbre 3, ici à l'aide d'un écrou 160 en appui sur le fond de la cavité de cette poulie 12. Cette poulie 12 comporte une douille en contact avec la bague interne du roulement 19. Une entretoise 159 annulaire est intercalée axialement entre la face frontale de la roue polaire avant 7 et la bague interne du roulement 19. L'arbre 3 traverse l'entretoise 159 et la douille de la poulie 12.

L'extrémité avant de l'arbre 3 porte la poulie 12 appartenant à un dispositif de transmission de mouvements à au mois une courroie entre l'alternateur et le moteur thermique du véhicule automobile, tandis que l'extrémité arrière 13 de diamètre réduit de l'arbre 3 porte des bagues collectrices reliées par des liaisons filaires au bobinage 100. Des balais appartenant à un porte-balais 14 sont disposés de façon à frotter sur les bagues collectrices. Le porte-balais est relié à un régulateur de tension.

Les bagues collectrices appartiennent à un ensemble collecteur 60.

Comme on peut le voir sur la figure 2, cet ensemble collecteur 60 comporte outre les bagues collectrices, des pattes de raccord électriques 61 pouvant être déformées pour assurer la connexion électrique au bobinage 100.

Ces pattes 61 sont reliées électriquement aux bagues collectrices.

Lorsque le bobinage d'excitation 100 est alimenté électriquement à partir des balais, le rotor 2 est magnétisé et devient un rotor inducteur avec formation de pôles magnétiques Nord-Sud au niveau des griffes et donc des dents des roues polaires.

Ce rotor inducteur crée un courant induit alternatif dans le stator induit lorsque l'arbre 3 tourne, le ou les ponts redresseurs permettant de transformer le courant alternatif induit en un courant continu, notamment pour alimenter les charges et les consommateurs du réseau de bord du véhicule automobile, ainsi que pour recharger la batterie dudit véhicule.

Ce rotor comporte des aimants permanents 38 interposés entre deux dents 9 voisines à la périphérie externe du rotor.

En variante, le rotor peut être dépourvu de tels aimants.

Les paliers avant 16 et arrière 17 comportent des ouvertures sensiblement latérales avant 50 et arrière 51 pour le passage de l'air en vue de permettre le refroidissement de l'alternateur par circulation d'air engendrée par la rotation d'un ventilateur 23 sur la face frontale avant du rotor et d'un autre ventilateur 24 sur la face dorsale arrière du rotor, chaque ventilateur étant pourvu d'une pluralité de pales 26.

On va maintenant décrire plus en détail le bobinage 100.

Comme illustré sur la figure 2 notamment, le bobinage électrique 100 est formé par un fil électrique 101,
- ce fil 101 ayant une première portion 104 enroulée selon une pluralité de spires 102 du bobinage 100, ce fil 101 présentant, le long de cette première portion 104, une section transversale avec au moins un méplat 115, cette section étant sensiblement carrée dans le présent exemple,
- ce fil 101 ayant au moins une deuxième portion 105 permettant le raccord du bobinage 100 à un circuit électrique, non représenté, ce fil présentant, le long de cette deuxième portion 105, une section transversale sensiblement circulaire.

Dans l'exemple de mise en œuvre de la figure 2, le bobinage 100 comporte :
- des spires 102 radialement intérieures de section transversale rectangulaire,
- des spires radialement extérieures 107 de section transversale sensiblement circulaire.

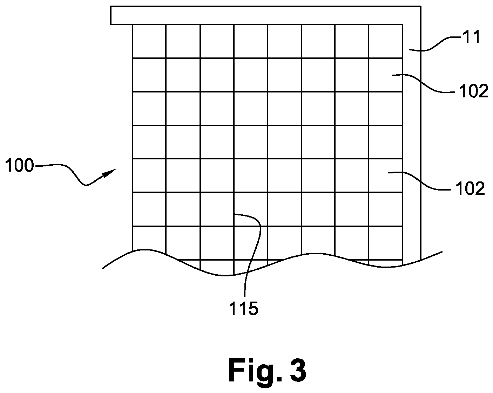

En variante, comme illustré sur la figure 3, toutes les spires 102 du bobinage 100 enroulées autour du moyeu 11 présentent une section rectangulaire.

Dans l'exemple de la figure 3, la superficie d'une section de fil 101 ou 102 est d'environ 0,5 mm² à 2 mm².

Le nombre de rangées parallèles de spires, dans la direction radiale, est par exemple compris entre 1 et 50.

Les spires 102 voisines du bobinage sont en appui l'une contre l'autre via les méplats de ces spires.

Dans les deux exemples de mise en œuvre de l'invention des figures 2 et 3, tandis que toutes les spires ou la grande majorité des spires enroulées autour du moyeu 11 présentent une section rectangulaire, le fil 101 présente une section transversale sensiblement circulaire dans les portions de raccord 108, situées dans les zones d'extrémités du fil 101.

Comme on peut le voir notamment sur la figure 2, chaque portion de raccord 108 est destinée à être raccordée à l'une des pattes de raccord 61 de l'ensemble collecteur 60, notamment par déformation de cette patte 61 sur le fil 101.

Le rotor 2 comporte un organe de guidage 70 permettant de guider la portion de raccord 108.

Dans l'exemple de la figure 2, l'organe de guidage 70 comporte les éléments suivants, dans le sens du bobinage 100 vers le collecteur 60 : un pion coudé 71, deux murets en regard 72 et une gorge longitudinale73.

L'organe de guidage 70 est par exemple réalisé sur une pièce d'un seul tenant.

La portion de raccord 108 du fil 101, après les spires, en quittant le moyeu 11, est enroulée autour du pion coudé 71 puis passe entre les murets 72 et dans la gorge 73.

Dans l'exemple de la figure 2, qui ne correspond pas à l'invention, la portion de raccord 108 est de section circulaire sur toute sa longueur.

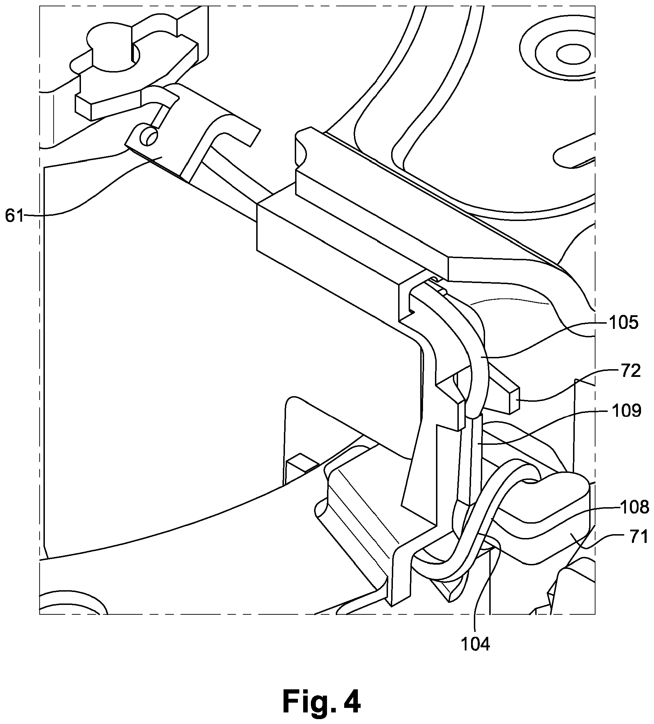

En variante et selon l'invention, comme illustré sur la figure 4, la portion de raccord 108 est formée partiellement sur la première portion 104 du fil de section transversale rectangulaire et partiellement sur la deuxième portion 105 de section circulaire.

Dans ce cas, le fil 101 comporte une portion de jonction 109 entre la première portion 104 de section rectangulaire et la deuxième portion 105 de section circulaire, portion de jonction 109 qui est, dans l'exemple décrit, localisée à l'intérieur de la portion de raccord 108.

Dans l'exemple de la figure 4, la portion de jonction 109 se situe entre le pion 71 et les murets 72.

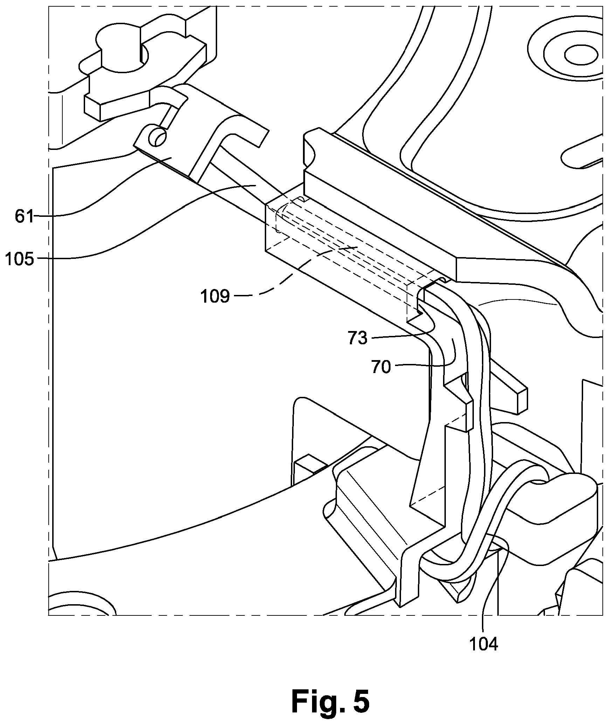

En variante, comme illustré sur la figure 5, la portion de jonction 109 se situe au niveau de la gorge 73 de l'organe de guidage 70.

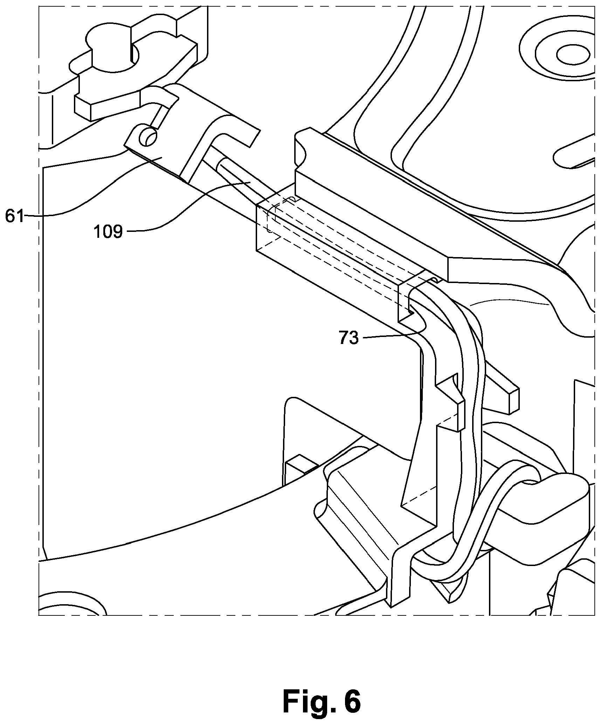

En variante encore, comme illustré sur la figure 6, la portion de jonction 109 est entre la gorge 73 et la patte de raccord 61.

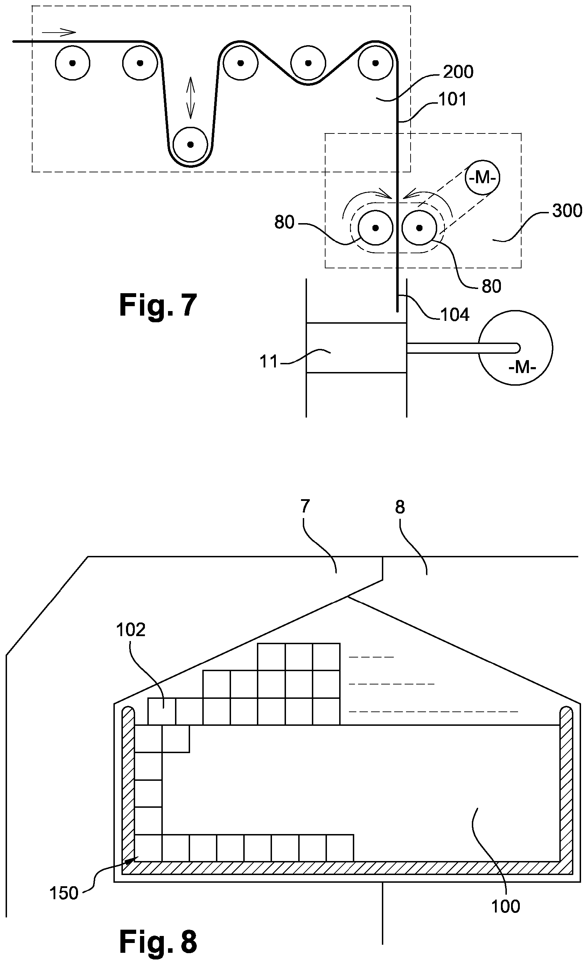

On a représenté sur la figure 7 une étape d'un procédé de fabrication du rotor 2, à savoir former sur le fil 101 la première portion 104 présentant une section transversale rectangulaire en faisant passer le fil 101 entre deux rouleaux 80 rotatifs, d'un ensemble de formage 300, pour former les méplats de la portion 104 du fil, qui est enroulé sur le moyeu 11.

Au préalable, avant de passer dans l'ensemble de formage 200, le fil 101 est passé dans un dispositif de stockage 200.

Dans un exemple de mise en œuvre de l'invention illustré à la figure 8, une pluralité de sections transversales de spires 102 rectangulaires ou carré, sont disposées de manière étagée de manière à remplir au maximum l'intérieur des cornes des roues polaires 7 et 8 du rotor.

En section transversale, cette configuration étagée est pyramidale de sommet radialement extérieur.

Un isolant 150 enveloppe les spires.

## Revendications

1. Rotor (2), notamment pour une machine électrique tournante, par exemple pour un alternateur, comportant un bobinage électrique (100) formé par au moins un fil électrique (101),
- ce fil ayant au moins une première portion (104) enroulée selon au moins une spire du bobinage, ce fil présentant, le long de cette première portion, une section transversale avec au moins un méplat (115),
- ce fil ayant au moins une deuxième portion (105) permettant le raccord du bobinage à un circuit électrique, ce fil présentant, le long de cette deuxième portion, une section transversale sensiblement circulaire,
- le fil comportant une portion de raccord (108) agencée pour être reliée à une patte de raccord (61) d'un ensemble collecteur (60) pour assurer la connexion électrique au circuit, la portion de raccord (108) étant formée partiellement sur la première portion (104) du fil de section transversale avec au moins un méplat et partiellement sur la deuxième portion (105) de section circulaire,
le rotor comportant, en outre, un organe de guidage (70), comportant au moins l'un des éléments suivants : une gorge (73), un muret (72), un pion (71), et permettant de guider la portion de raccord (108), le fil (101) comportant une portion de jonction (109) entre la première portion (104) du fil de section transversale avec au moins un méplat la deuxième portion (105) de section circulaire, et étant **caractérisé en ce que** la portion de jonction (109) est localisée à l'intérieur de la portion de raccord (108) de sorte à être située entre un pion (71) de l'organe de guidage (70) et des murets (72) dudit organe de guidage (70) ou au niveau d'une gorge (73) dudit organe de guidage (70) ou entre ladite gorge (73) et la patte de raccord (61).

2. Rotor selon la revendication 1, **caractérisé par le fait que** la première portion du fil est enroulée selon une pluralité de spires (102).

3. Rotor selon la revendication 1 ou 2, **caractérisé par le fait que** la section transversale de la première portion du fil présente une forme sensiblement polygonale, notamment sensiblement rectangulaire ou triangulaire, par exemple carrée ou triangulaire équilatérale.

4. Rotor selon l'une quelconque des revendications 1 à 3, **caractérisé par le fait que** des spires (102) voisines du bobinage sont en appui l'une contre l'autre via les méplats de ces spires.

5. Rotor selon l'une quelconque des revendications précédentes, **caractérisé par le fait que**, dans un plan passant par l'axe de rotation du rotor, le bobinage comporte une pluralité de sections transversales de spires (102) qui sont disposées suivant des rangées sensiblement parallèles entre elles.

6. Rotor selon la revendication précédente, **caractérisé par le fait que** ces rangées de sections de spires sont parallèles à l'axe de rotation du rotor.

7. Rotor selon l'une des revendications précédentes, **caractérisé par le fait qu'**une pluralité de sections transversales de spires, de préférence avec méplats, sont disposées de manière étagée.

8. Rotor selon l'une des revendications précédentes, **caractérisé par le fait que** la deuxième portion du fil est enroulée selon moins d'une spire

9. Rotor selon l'une quelconque des revendications précédentes, **caractérisé par le fait que** le bobinage comporte : des spires (102) radialement intérieures de section transversale avec au moins un méplat, des spires (107) radialement extérieures de section transversale sensiblement circulaire.

10. Machine électrique tournante comprenant un rotor selon l'une des revendications 1 à 9.

## Patentansprüche

1. Rotor (2), insbesondere für eine rotierende elektrische Maschine, zum Beispiel einen Generator, der eine von mindestens einem Leitungsdraht (101) gebildete elektrische Wicklung (100) aufweist,
- wobei dieser Draht mindestens einen gemäß mindestens einer Windung der Wicklung gewickelten ersten Abschnitt (104) hat, wobei dieser Draht entlang dieses ersten Abschnitts einen Querschnitt mit mindestens einer Abflachung (115) aufweist,
- wobei dieser Draht mindestens einen zweiten Abschnitt (105) hat, der den Anschluss der Wicklung an eine elektrische Schaltung erlaubt, wobei dieser Draht entlang dieses zweiten Abschnitts einen im Wesentlichen kreisförmigen Querschnitt aufweist,
- wobei der Draht einen Anschlussabschnitt (108) aufweist, der eingerichtet ist, mit einer Anschlusslasche (61) einer Kollektoreinheit (60) verbunden zu werden, um die elektrische Verbindung mit der Schaltung zu gewährleisten, wobei der Anschlussabschnitt (108) teilweise im ersten Abschnitt (104) des Drahts eines Querschnitts mit mindestens einer Abflachung und teilweise im zweiten Abschnitt (105) mit kreisförmigem Querschnitt ausgebildet ist,
wobei der Rotor außerdem ein Führungsorgan (70) aufweist, das mindestens eines der folgenden Elemente aufweist: eine Rille (73), einen hochstehenden Rand (72), einen Zapfen (71), und es ermöglicht, den Anschlussabschnitt (108) zu führen, wobei der Draht (101) einen Verbindungsabschnitt (109) zwischen dem ersten Abschnitt (104) des Drahts eines Querschnitts mit mindestens einer Abflachung und dem zweiten Abschnitt (105) mit kreisförmigem Querschnitt aufweist und **dadurch gekennzeichnet ist, dass** der Verbindungsabschnitt (109) im Inneren des Anschlussabschnitts (108) lokalisiert ist, um sich zwischen einem Zapfen (71) des Führungsorgans (70) und hochstehenden Rändern (72) des Führungsorgans (70) oder im Bereich einer Rille (73) des Führungsorgans (70) oder zwischen der Rille (73) und der Anschlusslasche (61) zu befinden.

2. Rotor nach Anspruch 1, **dadurch gekennzeichnet, dass** der erste Abschnitt des Drahts gemäß einer Vielzahl von Windungen (102) gewickelt ist.

3. Rotor nach Anspruch 1 oder 2, **dadurch gekennzeichnet, dass** der Querschnitt des ersten Abschnitts des Drahts eine im Wesentlichen polygonale Form aufweist, insbesondere im Wesentlichen rechteckig oder dreieckig, zum Beispiel quadratisch oder gleichseitig dreieckig.

4. Rotor nach Anspruch 1 bis 3, **dadurch gekennzeichnet, dass** benachbarte Windungen (102) der Wicklung über die Abflachungen dieser Windungen gegeneinander in Auflage sind.

5. Rotor nach einem der vorhergehenden Ansprüche, **dadurch gekennzeichnet, dass** in einer durch die Drehachse des Rotors verlaufenden Ebene die Wicklung eine Vielzahl von Querschnitten von Windungen (102) aufweist, die gemäß zueinander im Wesentlichen parallelen Reihen angeordnet sind.

6. Rotor nach einem der vorhergehenden Ansprüche, **dadurch gekennzeichnet, dass** diese Reihen von Windungsquerschnitten parallel zur Drehachse des Rotors sind.

7. Rotor nach einem der vorhergehenden Ansprüche, **dadurch gekennzeichnet, dass** eine Vielzahl von Querschnitten von Windungen, vorzugsweise mit Abflachungen, gestuft angeordnet sind.

8. Rotor nach einem der vorhergehenden Ansprüche, **dadurch gekennzeichnet, dass** der zweite Abschnitt des Drahts gemäß mindestens einer Windung gewickelt ist.

9. Rotor nach einem der vorhergehenden Ansprüche, **dadurch gekennzeichnet, dass** die Wicklung aufweist:
- radial innere Windungen (102) eines Querschnitts mit mindestens einer Abflachung,
- radial äußere Windungen (107) mit im Wesentlichen kreisförmigem Querschnitt.

10. Rotierende elektrische Maschine mit einem Rotor nach einem der Ansprüche 1 bis 9.

## Claims

1. Rotor (2), notably for a rotating electrical machine, for example for an alternator, comprising an electrical winding (100) formed by at least one electrical wire (101),
- this wire having at least one first portion (104) wound in at least one turn of the winding, this wire having, along this first portion, a cross section with at least one flat (115),
- this wire having at least one second portion (105) allowing the winding to be connected to an electrical circuit, this wire having, along this second portion, a substantially circular cross section,
- the wire comprising a connecting portion (108) arranged to be linked to a connecting lug (61) of a commutator assembly (60) to ensure the electrical connection to the circuit, the connecting portion (108) being formed partially on the first portion (104) of the wire of cross section with at least one flat and partially on the second portion (105) of circular section,
the rotor further comprising a guiding member (70) comprising at least one of the following elements: a groove (73), a wall (72), a pin (71), and that makes it possible to guide the connecting portion (108), the wire (101) comprising a joining portion (109) between the first portion (104) of the wire of cross section with at least one flat and the second portion (105) of circular section, and being **characterized in that** the joining portion (109) is located inside the connecting portion (108) so as to be situated between a pin (71) of the guiding member (70) and the walls (72) of said guiding member (70) or in a groove (73) of said guiding member (70) or between said groove (73) and the connecting lug (61) .

2. Rotor according to Claim 1, **characterized in that** the first portion of the wire is wound according to a plurality of turns (102).

3. Rotor according to Claim 1 or 2, **characterized in that** the cross section of the first portion of the wire has a substantially polygonal form, notably substantially rectangular or triangular, for example square or equilateral triangular.

4. Rotor according to Claim 1 to 3, **characterized in that** adjacent turns (102) of the winding bear against one another via the flats of these turns.

5. Rotor according to one of the preceding claims, **characterized in that**, in a plane passing through the axis of rotation of the rotor, the winding comprises a plurality of cross sections of turns (102) which are disposed in substantially mutually parallel rows.

6. Rotor according to one of the preceding claims, **characterized in that** these rows of sections of turns are parallel to the axis of rotation of the rotor.

7. Rotor according to one of the preceding claims, **characterized in that** a plurality of cross sections of turns, preferably with flats, are disposed in a staged manner.

8. Rotor according to one of the preceding claims, **characterized in that** the second portion of the wire is wound according to at least one turn.

9. Rotor according to any one of the preceding claims, **characterized in that** the winding comprises:
- radially inner turns (102) of cross section with at least one flat,
- radially outer turns (107) of substantially circular cross section.

10. Rotary electrical machine comprising a rotor according to any one of the claims 1 to 9.
